# EUROPEAN PATENT APPLICATION

(11) **EP 4 549 878 A1**
(43) Date of publication of application: **07.05.2025**
(21) Application number: 23845470.6
(22) Date of filing: 21.07.2023
(51) Int. Cl.: G01C 21/00

(54) **CRUISE ROUTE MAP GENERATION METHOD AND APPARATUS, ELECTRONIC DEVICE, AND STORAGE MEDIUM**

(30) Priority: 29.07.2022 CN 202210913779
(71) Applicant: Horizon Journey (Shanghai) Technology Co., Ltd., Shanghai 201306 (CN)
(72) Inventor: LU, Jianfeng, Shanghai 201306 (CN); HUANG, Yilin, Shanghai 201306 (CN); HAN, Zhuowei, Shanghai 201306 (CN)
(74) Representative: V.O.
(86) International application number: PCT/CN2023/108741
(87) International publication number: WO 2024/022260

(57) **Abstract**

Provided are a cruise route map generation method and apparatus, an electronic device, and a storage medium. The method includes: in response to a route learning request of a user, determining a target learning route corresponding to the route learning request; obtaining ambient environment information of a current vehicle during a process in which the current vehicle drives along the target learning route; generating mapping information corresponding to the target learning route based on the ambient environment information; and generating a cruise route map corresponding to the target learning route based on the mapping information. According to this method, a cruise route customization function can be provided to users, so as to provide a dedicated cruise route map to the users. A dedicated route cruise function can be provided to the users based on the cruise route map, thus a navigation and autonomous driving function can be implemented without relying on a high-precision map. This helps to improve commonality and resolve problems in existing technologies that, due to reliance on the high-precision map, the navigation and autonomous driving function cannot be provided in an area that is not covered by the high-precision map, thereby improving user experience.

## Description

This disclosure claims priority to Chinese patent application No. CN202210913779.0, filed with the China National Intellectual Property Administration on July 29, 2022 and entitled "CRUISE ROUTE MAP GENERATION METHOD AND APPARATUS, ELECTRONIC DEVICE, AND STORAGE MEDIUM", which is incorporated herein by reference in its entirety.

### FIELD OF THE INVENTION

This disclosure relates to technologies of autonomous driving, and in particular, to a cruise route map generation method and apparatus, an electronic device, and a storage medium.

### BACKGROUND OF THE INVENTION

A navigation and autonomous driving function (also referred to as a cruise function) may provide users with advanced navigation automatic functions such as ramp merging and exiting, automatic lane changing, active overtaking, roundabout traffic, intersection traffic, and narrow road meeting, to improve driving safety and comfort of the users. In related technologies, the navigation and autonomous driving function of a vehicle relies on high-precision environment information provided during a driving process of the vehicle by a high-precision map provided by a third party. However, a limited coverage area and low update frequency of the high-precision map greatly limit commonality of the navigation and autonomous driving function. For example, the navigation and autonomous driving function cannot be provided in an area that is not covered by the high-precision map.

### SUMMARY OF THE INVENTION

To resolve technical problems such as poor commonality of a navigation and autonomous driving function, this disclosure is proposed. Embodiments of this disclosure provide a cruise route map generation method and apparatus, an electronic device, and a storage medium.

According to an aspect of an embodiment of this disclosure, a cruise route map generation method is provided, including: in response to a route learning request of a user, determining a target learning route corresponding to the route learning request; obtaining ambient environment information of a current vehicle during a process in which the current vehicle drives along the target learning route; generating mapping information corresponding to the target learning route based on the ambient environment information; and generating a cruise route map corresponding to the target learning route based on the mapping information.

According to another aspect of an embodiment of this disclosure, a cruise route map generation apparatus is provided, including: a first determining module, configured to determine, in response to a route learning request of a user, a target learning route corresponding to the route learning request; a first obtaining module, configured to obtain ambient environment information of a current vehicle during a process in which the current vehicle drives along the target learning route; a first processing module, configured to generate mapping information corresponding to the target learning route based on the ambient environment information; and a second processing module, configured to generate a cruise route map corresponding to the target learning route based on the mapping information.

According to still another aspect of an embodiment of this disclosure, a computer readable storage medium is provided. The storage medium stores a computer program, and the computer program is used for implementing the cruise route map generation method according to any one of the foregoing embodiments of this disclosure.

According to yet another aspect of an embodiment of this disclosure, an electronic device is provided. The electronic device includes: a processor; and a memory configured to store processor-executable instructions. The processor is configured to read the executable instructions from the memory and execute the instructions to implement the cruise route map generation method according to any one of the foregoing embodiments of this disclosure.

Based on the cruise route map generation method and apparatus, the electronic device, and the storage medium that are provided in the foregoing embodiments of this disclosure, a cruise route customization function may be provided to users. The users may take a route that needs to be traveled frequently as the target learning route. By driving a vehicle on the target learning route, a vehicle-mounted computing platform or a related domain controller of the vehicle may collect ambient environment information by using a sensor of the vehicle. The target learning route is learned based on the collected ambient environment information to construct the cruise route map for the target learning route, so as to provide the users with a dedicated cruise route map. A dedicated route cruise function may be provided to the users based on the cruise route map, thus a navigation and autonomous driving function may be implemented without relying on a high-precision map. This helps to improve commonality of a navigation and autonomous driving system and resolve problems in existing technologies that, due to reliance on the high-precision map, the navigation and autonomous driving function cannot be provided in an area that is not covered by the high-precision map, thereby improving user experience.

### BRIEF DESCRIPTION OF THE DRAWINGS

FIG. 1 is an exemplary application scenario of a cruise route map generation method according to this disclosure;
FIG. 2 is a schematic flowchart of a cruise route map generation method according to an exemplary embodiment of this disclosure;
FIG. 3 is a schematic flowchart of a cruise route map generation method according to another exemplary embodiment of this disclosure;
FIG. 4 is a schematic flowchart of step 210 according to an exemplary embodiment of this disclosure;
FIG. 5 is a schematic flowchart of a cruise route map generation method according to still another exemplary embodiment of this disclosure;
FIG. 6 is a schematic diagram of display of visualized learning progress according to an exemplary embodiment of this disclosure;
FIG. 7 is a schematic flowchart of a cruise route map generation method according to yet another exemplary embodiment of this disclosure;
FIG. 8 is a schematic diagram of a structure of a cruise route map generation apparatus according to an exemplary embodiment of this disclosure;
FIG. 9 is a schematic diagram of a structure of a cruise route map generation apparatus according to another exemplary embodiment of this disclosure;
FIG. 10 is a schematic diagram of a structure of a first control module 510 according to an exemplary embodiment of this disclosure;
FIG. 11 is a schematic diagram of a structure of a cruise route map generation apparatus according to still another exemplary embodiment of this disclosure;
FIG. 12 is a schematic diagram of a structure of a cruise route map generation apparatus according to yet another exemplary embodiment of this disclosure; and
FIG. 13 is a schematic diagram of a structure of an electronic device according to an application embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that a navigation and autonomous driving function (also referred to as a cruise function) may provide users with advanced navigation and autonomous driving functions such as ramp merging and exiting, automatic lane changing, active overtaking, roundabout traffic, intersection traffic, and narrow road meeting, to improve driving safety and comfort of the users. At present, the navigation and autonomous driving function of a vehicle relies on high-precision environment information provided during a driving process of the vehicle by a high-precision map provided by a third party. However, a limited coverage area and low update frequency of the high-precision map greatly limit commonality of the navigation and autonomous driving function. For example, the navigation and autonomous driving function cannot be provided in an area that is not covered by the high-precision map.

### Exemplary overview

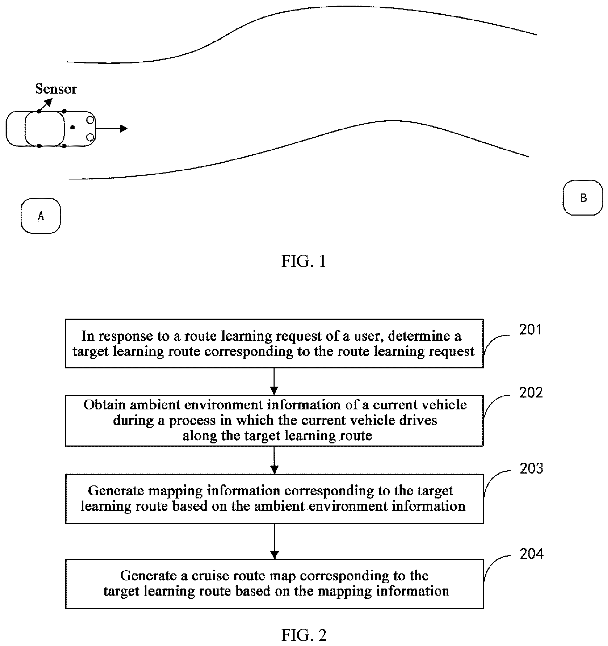

FIG. 1 is an exemplary application scenario of a cruise route map generation method according to this disclosure. When users need to frequently drive on a certain route, such as a route from home A to company B, a dedicated route cruise function may be provided to the users through the cruise route map generation method provided in this disclosure. Through an interaction interface (such as a central control screen), the users may enter a navigation and autonomous driving system that implements the cruise route map generation method in this disclosure to provide the users with a cruise interface. The user may select or create a to-be-learned target learning route on the cruise interface and trigger a route learning request. In response to the route learning request of the user, the navigation and autonomous driving system may determine, based on the route learning request, the target learning route that the user currently needs to learn, so as to enter a learning state. When the user drives a current vehicle along the target learning route, the navigation and autonomous driving system may obtain ambient environment information in a real-time manner through sensors such as a camera on the current vehicle, so that mapping information corresponding to the target learning route is constantly generated based on the ambient environment information. A cruise route map corresponding to the target learning route is generated based on the mapping information to achieve memory and learning of the target learning route, so as to obtain a dedicated route cruise map that meets cruise requirements corresponding to the target learning route, thereby providing the user with a dedicated route cruise function. In this way, a navigation and autonomous driving function may be implemented without relying on a high-precision map. This helps to improve commonality of the navigation and autonomous driving system and resolve problems in related technologies that, due to reliance on the high-precision map, the navigation and autonomous driving function cannot be provided in an area that is not covered by the high-precision map, thereby improving user experience.

### Exemplary method

FIG. 2 is a schematic flowchart of a cruise route map generation method according to an exemplary embodiment of this disclosure. This embodiment may be applicable to an electronic device, such as but not limited to a vehicle-mounted computing platform and an autonomous driving domain controller. As shown in FIG. 2, the method includes the following steps.

Step 201. In response to a route learning request of a user, determine a target learning route corresponding to the route learning request.

The route learning request may include a start point and an end point that are selected by the user, and a route from the start point to the end point. The user may enter a homepage of a navigation and autonomous driving system through an interaction interface (such as a central control screen), and enter a cruise interface through a cruise function entry on the homepage. The to-be-learned target learning route may be selected or created on a cruise interface, and the route learning request may be triggered. For example, clicking "Create New Route" on the cruise interface to enter a map interface may provide the user with the map interface based on a navigation map. The user may select a target start point and a target end point on the map interface. In response to the user selection, a recommended route from the target start point to the target end point may be displayed for the user. After user confirmation, the route learning request may be triggered based on the target start point, the target end point, and the corresponding route. In response to the route learning request of the user, the target learning route that the user currently needs to learn may be determined based on the route learning request, so as to enter a learning state. An entry of the navigation and autonomous driving system may be integrated into an IVI (in-vehicle infotainment) central control screen to serve as a functional interaction interface.

In an optional example, the user may also select an uncompleted learning route that has been created as the target learning route and trigger the route learning request to proceed with this learning. For example, when the user needs to learn multiple routes that are frequently traveled, since learning of each route cannot be completed in a single session, multiple times of learning are required. To further improve user experience, learning of multiple routes may be taken concurrently. For example, the user needs to learn a route 1 from a point A to a point B and a route 2 from the point A to a point C. After each route is created, if learning is not completed after the learning is made in a single session, such as for the route 1, this route may be saved. When the user needs to take the route 1 again in the future, next learning may be made. In this way, the user does not need to specifically learn multiple times while driving on this route, but may continue learning based on daily needs when choosing to travel on this route.

In an optional example, step 201 may be performed by a processor by calling corresponding instructions stored in a memory, or may be performed by a first determining module that is run by the processor.

Step 202. Obtain ambient environment information of a current vehicle during a process in which the current vehicle drives along the target learning route.

The ambient environment information may be collected by using a sensor disposed on the current vehicle. The sensor may include a camera, a laser radar, a millimeter wave radar, or the like. This may be specifically set according to actual requirements, and is not limited in this disclosure. After the target learning route is determined for the user, the user may drive the current vehicle along the target learning route from the target start point to the target end point. During the driving process, the ambient environment information of the target learning route is collected to provide data support for the learning of the target learning route.

Optionally, during the driving process, the target learning route may also be displayed on the interaction interface.

In an optional example, step 202 may be performed by the processor by calling corresponding instructions stored in the memory, or may be performed by a first obtaining module that is run by the processor.

Step 203. Generate mapping information corresponding to the target learning route based on the ambient environment information.

The mapping information may include feature information about road signs such as a lane marking, a sidewalk, and a parking line, and feature information about buildings on both sides of a road. This may be specifically set according to actual requirements. For example, the mapping information is generated based on an SLAM (simultaneous localization and mapping) algorithm, and a specific principle is not be described.

In an optional example, step 203 may be performed by the processor by calling corresponding instructions stored in the memory, or may be performed by a first processing module that is run by the processor.

Step 204. Generate a cruise route map corresponding to the target learning route based on the mapping information.

The cruise route map may be a global map corresponding to the target learning route, and the mapping information may include local information of surrounding environments when the current vehicle is at different positions, that is, environmental feature information of different route sections of the target learning route. The mapping information is integrated into global information to achieve incremental mapping. A specific mapping mode is not be described. The current vehicle may implement learning in a single session by driving from the target start point to the target end point. In practical applications, a final cruise route map of the target learning route may be completed through multiple times of learning. Each time learning is completed, the learned cruise route map may be inspected to determine whether the cruise route map meets cruise requirements. If the cruise requirements are met, the final cruise route map may be obtained, or otherwise, learning may be continued. In specific implementation, a maximum threshold of learning times may also be set. When the cruise requirements are still not met after the learning times exceeds the maximum threshold of learning times, the user may be prompted to, for example, switch to another route or give up learning. This may be specifically set according to actual requirements.

In an optional example, the cruise route map may be generated at the current vehicle side. Alternatively, the mapping information may also be uploaded to a server to generate the cruise route map by the server. This may be specifically set according to actual requirements.

In an optional example, step 204 may be performed by the processor by calling corresponding instructions stored in the memory, or may be performed by a second processing module that is run by the processor.

According to the cruise route map generation method provided in this embodiment of this disclosure, a cruise route customization function may be provided to the user. The user may take a route that needs to be traveled frequently as the target learning route. By driving a vehicle on the target learning route, a vehicle-mounted computing platform or a related domain controller of the vehicle may collect the ambient environment information by using the sensor of the vehicle. The target learning route is learned based on the collected ambient environment information to construct the cruise route map for the target learning route, so as to provide the user with a dedicated cruise route map. A dedicated route cruise function may be provided to the user based on the cruise route map, thus a navigation and autonomous driving function may be implemented without relying on a high-precision map. This helps to improve commonality of the navigation and autonomous driving system and resolve problems in existing technologies that, due to reliance on the high-precision map, the navigation and autonomous driving function cannot be provided in an area that is not covered by the high-precision map, thereby improving user experience.

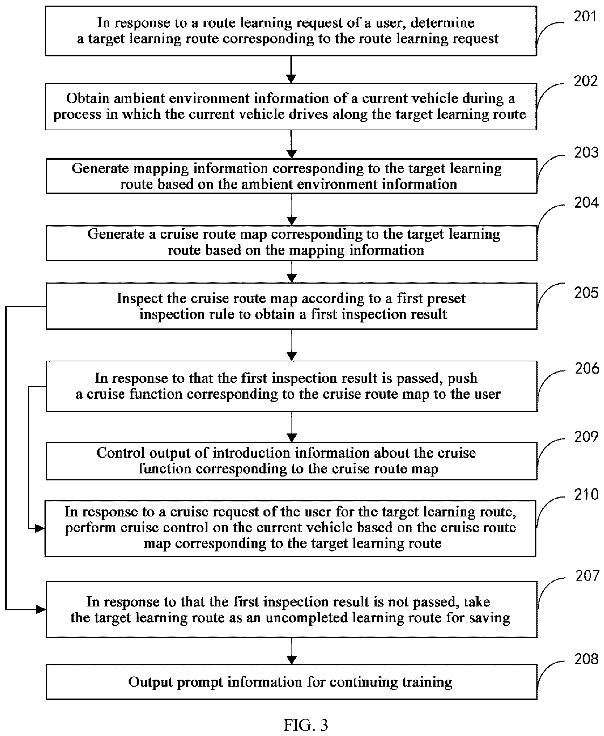

FIG. 3 is a schematic flowchart of a cruise route map generation method according to another exemplary embodiment of this disclosure.

In an optional example, the method in this embodiment of this disclosure further includes the following steps.

Step 205. Inspect the cruise route map according to a first preset inspection rule to obtain a first inspection result.

The first preset inspection rule may be set according to actual cruise requirements, which is not limited in this disclosure. For example, the first preset inspection rule is set based on a condition that usually needs to be met by a cruising map in combination with requirements of dedicated route cruise. The first inspection result may include inspection results of passed or not passed.

In an optional example, step 205 may be performed by the processor by calling corresponding instructions stored in the memory, or may be performed by a third processing module that is run by the processor.

Step 206. In response to that the first inspection result is passed, push a cruise function corresponding to the cruise route map to the user.

If the first inspection result is passed, it indicates that the current cruise route map meets the cruise requirements and may be used to provide the user with the dedicated route cruise function. In this case, the cruise function corresponding to the cruise route map may be pushed to the user. A specific pushing mode may be set according to actual requirements, and is not limited in this disclosure. For example, it is possible to control a display interface to display similar information such as "Mapping successful, you can use the cruise function for this route now", and a cruise function startup entry may be provided on the interface, or the user may be prompted of a manner for entering the cruise function, so that the user masters how to start the cruise function for the current route. This may be specifically set according to actual requirements.

In an optional example, step 206 may be performed by the processor by calling corresponding instructions stored in the memory, or may be performed by a fourth processing module that is run by the processor.

In this disclosure, through learning of the dedicated route cruise, the dedicated route cruise function may be provided to the user, so that the user can enjoy the dedicated route cruise function for a frequently traveled route. On one hand, a cruise route customization service may be provided to the user; and on the other hand, the cruise function may still be provided to the user in an area that is not covered by a high-precision map, thus helping to greatly improve the user experience.

In an optional example, the method in this embodiment of this disclosure further includes the following step.

Step 207. In response to that the first inspection result is not passed, saving the target learning route as an uncompleted learning route.

If the first inspection result is not passed, it indicates that the cruise route map of the target learning route currently does not meet the cruise requirements. The target learning route may be saved as an uncompleted learning route to wait for next learning of the user for the target learning route.

In an optional example, step 207 may be performed by the processor by calling corresponding instructions stored in the memory, or may be performed by a fifth processing module that is run by the processor.

In this disclosure, a saving function for the uncompleted learning route enables the user to intermittently learn, and may support concurrent learning of multiple routes. When the user needs to take a certain uncompleted learning route, learning may be started in a real-time manner, without driving unnecessarily on a certain route to learn that route. This helps to further improve the user experience.

In an optional example, after step 207 of saving the target learning route as an uncompleted learning route, the method in this embodiment of this disclosure further includes the following step.

Step 208. Output prompt information for continuing training.

Specific content of the prompt information for continuing training may be set according to actual requirements, for example, may be "Your current route is not yet completed but has been saved. Please continue to learn next time". An output mode may be implemented in any feasible way, which is not limited in this disclosure. For example, the prompt information may be output through a display screen, or may be output through voice, or may be output through both voice and the display screen. This is not specifically limited.

In an optional example, step 208 may be performed by the processor by calling corresponding instructions stored in the memory, or may be performed by a first output module that is run by the processor.

In an optional example, after step 206 of in response to that the first inspection result is passed, pushing the cruise function corresponding to the cruise route map to the user, the method further includes the following step.

Step 209. Control output of introduction information about the cruise function corresponding to the cruise route map.

The introduction information about the cruise function may include information that needs to be noted when using the cruise function, startup mode information of the cruise function, and other possible information. This may be specifically set according to actual requirements, and is not limited in this disclosure. An output mode of the introduction information about the cruise function may be set according to actual requirements. For example, the introduction information may be output through video playback, or may be output through voice playback, or may be output through both voice playback and video playback. Details are not described.

In an optional example, step 209 may be performed by the processor by calling corresponding instructions stored in the memory, or may be performed by a second output module that is run by the processor.

In this disclosure, outputting the introduction information about the cruise function may enable the user to timely and conveniently master the relevant information of the cruise function, so that the user can better apply the cruise function, thereby further improving the user experience.

In an optional example, after step 206 of in response to that the first inspection result is passed, pushing the cruise function corresponding to the cruise route map to the user, the method further includes the following step.

Step 210. In response to a cruise request of the user for the target learning route, perform cruise control on the current vehicle based on the cruise route map corresponding to the target learning route.

The cruise request may be triggered by the user after selecting the target learning route that has already been learned on a cruise-function interface. Specific display content and a display mode of the cruise-function interface may be set according to actual requirements, and are not limited in this disclosure. An entry of the cruise-function interface may be set according to actual requirements, for example, may be set on a homepage of the navigation and autonomous driving system. This is not limited in this disclosure. The cruise control refers to provide the vehicle with environmental information such as a lane marking, a road edge, and a traffic sign based on the cruise route map, so as to perform route planning and control for implementing the navigation and autonomous driving function. In this way, the user is provided with navigation and autonomous driving functions, such as ramp merging and exiting, automatic lane changing, active overtaking, left turning at roundabouts, intersections, or unprotected intersections, and narrow road meeting. A specific control principle is not described in detail.

In an optional example, step 210 may be performed by the processor by calling corresponding instructions stored in the memory, or may be performed by a first control module that is run by the processor.

In this disclosure, after learning of the target learning route is completed, the dedicated route cruise function may be provided to the user regardless of whether the target learning route is a route section covered by the high-precision map.

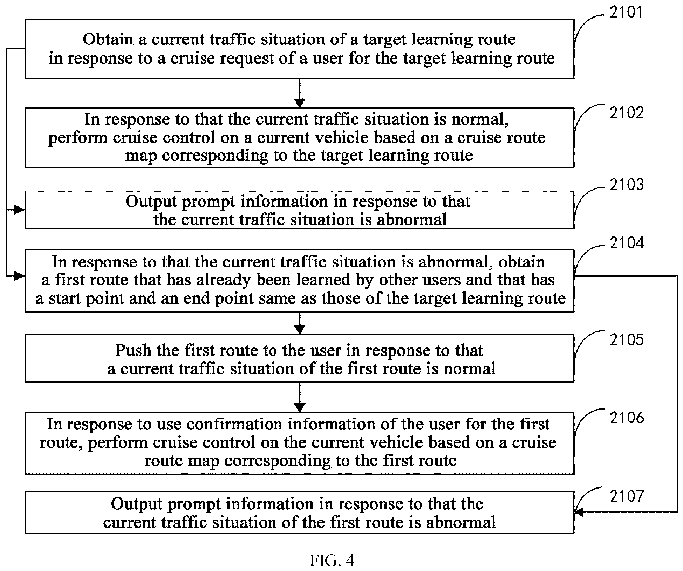

FIG. 4 is a schematic flowchart of step 210 according to an exemplary embodiment of this disclosure.

In an optional example, step 210 of in response to the cruise request of the user for the target learning route, performing cruise control on the current vehicle based on the cruise route map corresponding to the target learning route includes the following steps.

Step 2101. Obtain a current traffic situation of the target learning route in response to the cruise request of the user for the target learning route.

The current traffic situation of the target learning route may be obtained based on the navigation map or in other ways. This may be specifically set according to actual requirements, and is not limited in this disclosure. The current traffic situation may include two types of situations: normal and abnormal. For example, if it is determined based on the navigation map that the target learning route has a low current traffic rate or is impassable due to construction or other reasons, it may be determined that the current traffic situation is abnormal.

In an optional example, step 2101 may be performed by the processor by calling corresponding instructions stored in the memory, or may be performed by a first obtaining unit that is run by the processor.

Step 2102. In response to that the current traffic situation is normal, perform cruise control on the current vehicle based on the cruise route map corresponding to the target learning route.

The normal current traffic situation indicates that dedicated route cruising may be performed, so that cruise control may be performed on the current vehicle based on the cruise route map corresponding to the target learning route.

In an optional example, step 2102 may be performed by the processor by calling corresponding instructions stored in the memory, or may be performed by a first control unit that is run by the processor.

In an optional example, the method in this embodiment of this disclosure further includes the following step.

Step 2103. Output prompt information in response to that the current traffic situation is abnormal.

The prompt information may be set according to actual requirements, for example, may be "The current route is impassable, please switch to another route". The prompt information may be output in any implementable way, such as through voice, display, voice+display. Details are not described.

In an optional example, step 2103 may be performed by the processor by calling corresponding instructions stored in the memory, or may be performed by a first output unit that is run by the processor.

In this disclosure, the current traffic situation of the route is determined before the dedicated route cruise function is enabled for the user. The user may be prompted when the traffic situation is abnormal, which may further improve the user experience.

In an optional example, the method in this embodiment of this disclosure further includes the following steps.

Step 2104. In response to that the current traffic situation is abnormal, obtain a first route that has already been learned by other users and that has a start point and an end point same as those of the target learning route.

If the current traffic situation is abnormal, the user may also be provided with another route (the first route) that has already been learned by other users for the user to select. Specifically, the first route of other users may be obtained from the server (such as the cloud). The first route of other users may be a route authorized by the other users for sharing. For example, other users upload a memorized cruise route map to the server after completing dedicated cruise learning of the first route, so that the cruise route map may be shared by more users.

In practical applications, when there are multiple routes that are already learned by other users and that have start points and end points same as those of the target learning route, one route may be determined therefrom to serve as the first route according to a certain rule, or multiple first routes may be provided to the user for selection. For example, selectable first routes are displayed on an interaction interface of the display screen for the user to view and select. This may be specifically set according to actual requirements.

In an optional example, step 2104 may be performed by the processor by calling corresponding instructions stored in the memory, or may be performed by a second obtaining unit that is run by the processor.

Step 2105. Push the first route to the user in response to that a current traffic situation of the first route is normal.

To make ensure that the first route is passable, the traffic situation of the first route may also be determined, for example, may be determined based on the navigation map. When the current traffic situation of the first route is normal, the first route may be pushed to the user. A specific push mode may be set according to actual requirements. For example, the first route may be marked and displayed on a map, and push voice may be played. The display interface may also provide trigger buttons such as "confirm", or voice interaction confirmation modes. This is not specifically limited.

In an optional example, step 2105 may be performed by the processor by calling corresponding instructions stored in the memory, or may be performed by a first processing unit that is run by the processor.

Step 2106. In response to use confirmation information of the user for the first route, perform cruise control on the current vehicle based on a cruise route map corresponding to the first route.

The use confirmation information of the user may be triggered and obtained in any feasible way, for example, may be triggered and obtained in at least one of the following ways: voice confirmation and confirmation through on-screen display buttons. After the user confirms to use the first route, the cruise function may be provided to the user based on the cruise route map corresponding to the first route.

In an optional example, step 2106 may be performed by the processor by calling corresponding instructions stored in the memory, or may be performed by a second control unit that is run by the processor.

Step 2107. Output prompt information in response to that the current traffic situation of the first route is abnormal.

When the current traffic situation of the first route is also abnormal, the prompt information may be output to prompt the user to give up using the cruise function or switch to another route again. Specific content and output modes of the prompt information may be set according to actual requirements.

In an optional example, step 2107 may be performed by the processor by calling corresponding instructions stored in the memory, or may be performed by a second output unit that is run by the processor.

In this disclosure, when the current traffic situation of the target learning route of the user is abnormal, other routes that are already learned by other users are provided to the user for selection, so that the user may also enjoy cruise functions of more routes, thereby further improving the user experience.

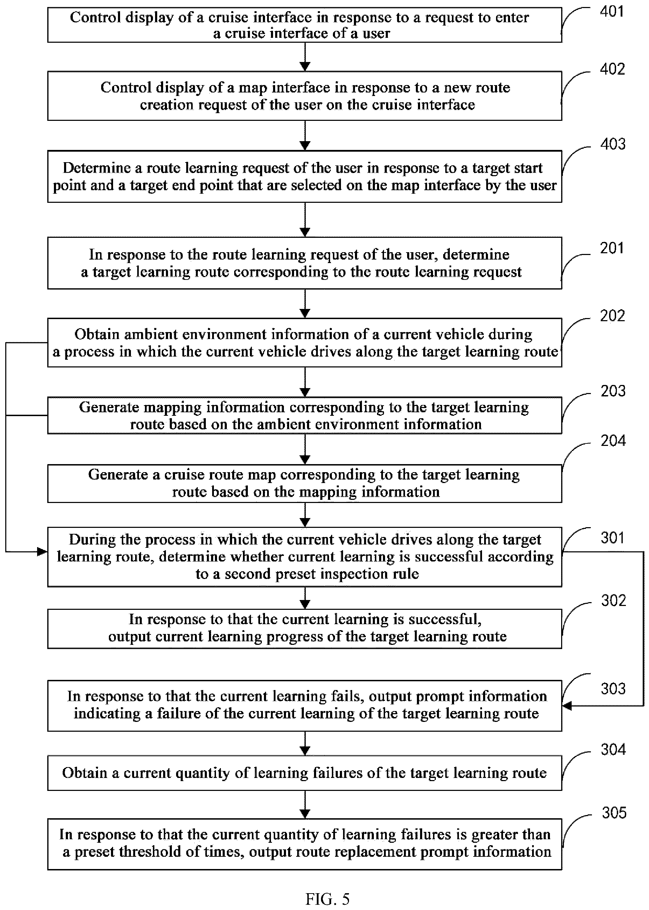

FIG. 5 is a schematic flowchart of a cruise route map generation method according to still another exemplary embodiment of this disclosure.

In an optional example, the method in this embodiment of this disclosure further includes the following steps.

Step 301. During the process in which the current vehicle drives along the target learning route, determine whether current learning is successful according to a second preset inspection rule.

The second preset inspection rule may be set according to actual requirements. For example, during the driving process of the current vehicle, if the current vehicle deviates from the target learning route, it may be determined that the current learning is failed. If the sensor has a failure and cannot collect the ambient environment information, it may be determined that the current learning is failed. Failures of the sensor may include, for example, the camera being blocked and GNSS (global navigation satellite system) signal loss.

In an optional example, step 301 may be performed by the processor by calling corresponding instructions stored in the memory, or may be performed by a sixth processing module that is run by the processor.

Step 302. In response to that the current learning is successful, output current learning progress of the target learning route.

The current learning progress may be determined based on a learning memory situation, for example, may be determined based on a completion status of the cruise route map, and/or a quantity of learning times, and other related factors. This may be specifically set according to actual requirements, and is not limited in this disclosure. The current learning progress may be output in any implementable way. For example, output modes may include at least one of the following: voice output and visual output. This is not limited in this embodiment.

Optionally, after the current learning is successful, an encouragement message may be output to encourage the user to keep training this route. Specific content and output modes may be set according to actual requirements.

In an optional example, step 302 may be performed by the processor by calling corresponding instructions stored in the memory, or may be performed by a third output module that is run by the processor.

Step 303. In response to that the current learning fails, output prompt information indicating a failure of the current learning of the target learning route.

The prompt information indicating a failure of the current learning may include both information about and reasons for the failure of the current learning. For example, the reasons for the failure may include that the vehicle deviates from the target learning route and the vehicle cannot obtain environmental information on a certain road section. This may be specifically set according to actual requirements.

Optionally, failure prompts may also be made through a dashboard of the current vehicle, which may be set according to actual requirements.

Optionally, after the current learning fails, retraining prompt information may also be output to prompt the user to retrain. Specific prompt content may be set according to actual requirements.

In an optional example, step 303 may be performed by the processor by calling corresponding instructions stored in the memory, or may be performed by a fourth output module that is run by the processor.

In this disclosure, each time learning is completed, corresponding information may be output based on a learning situation. When the current learning is successful, the current learning progress may be output, so that the user can master the learning situation of the current route in a timely manner. When the learning fails, the user may be prompted with reasons for the failure, which helps the user to complete the learning better, thereby further improving the user experience.

In an optional example, the method in this embodiment of this disclosure further includes the following steps.

Step 304. Obtain a current quantity of learning failures of the target learning route.

Each time learning is completed, the learning situation may be recorded, which may include two situations: learning succeeded and learning failed. Moreover, a quantity of failures may be recorded to serve as reference for success or failure of final learning.

In an optional example, step 304 may be performed by the processor by calling corresponding instructions stored in the memory, or may be performed by a second obtaining module that is run by the processor.

Step 305. In response to that the current quantity of learning failures is greater than a preset threshold of times, output route replacement prompt information.

The preset threshold of times may be set according to actual requirements, for example, may be set to 10 or 15. This is not specifically limited. If the current quantity of learning failures is greater than the preset threshold of times, it indicates that it is too difficult to learn the current route and a final cruise route map that meets requirements may not be completed. Therefore, route replacement prompt information may be output to the user to prompt the user that the learning of the current route may not be completed, and to recommend the user to give up this route or switch to another route. Specific output content and output modes may be set according to actual requirements.

In an optional example, step 305 may be performed by the processor by calling corresponding instructions stored in the memory, or may be performed by a fifth output module that is run by the processor.

In an optional example, step 302 of in response to that the current learning is successful, outputting the current learning progress of the target learning route includes: in response to that the current learning is successful, outputting the current learning progress of the target learning route to a display device, and controlling to display the current learning progress on a display screen of the display device in a preset manner.

The preset manner may be set according to actual requirements. For example, the preset manner may be a manner of a progress bar or a manner of a circular progress bar. This is not specifically limited, provided that the user can clearly and conveniently view the current learning progress. The display device may be a central control screen on the vehicle, or may be other possible display devices in practical applications, which is not specifically limited.

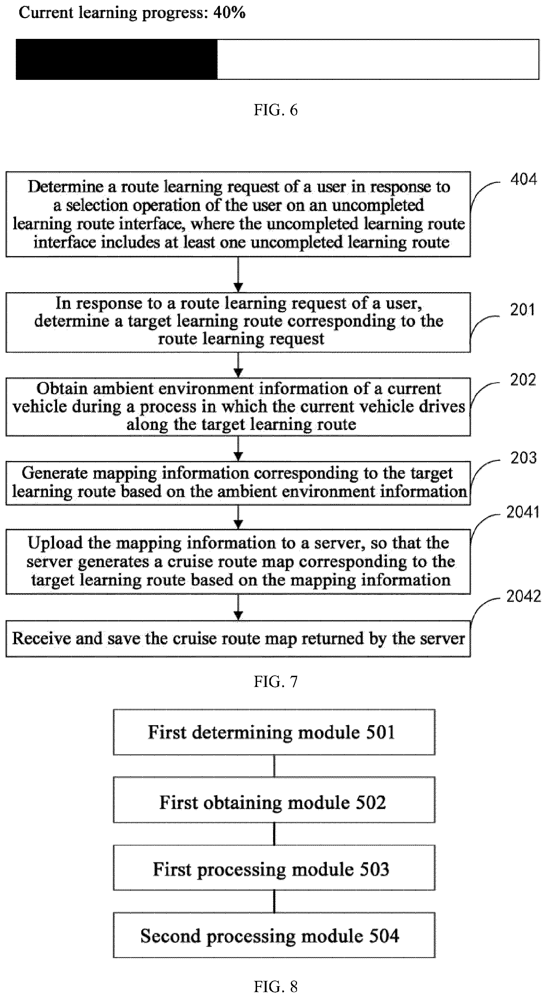

For example, FIG. 6 is a schematic diagram of display of visualized learning progress according to an exemplary embodiment of this disclosure.

In an optional example, before step 201 of in response to the route learning request of the user, determining the target learning route corresponding to the route learning request, the method in this embodiment of this disclosure further includes the following steps.

Step 401. Control display of a cruise interface in response to a request to enter the cruise interface of the user.

The request to enter the cruise interface may be triggered by the user on a home page or other possible interface entries of the navigation and autonomous driving system. A specific interface display mode and interface switching logic may be set according to actual requirements, and are not limited in this disclosure. The cruise interface may include a selection entry for an uncompleted route that has been created and/or a new route creation entry, which may be set according to actual requirements.

In an optional example, step 401 may be performed by the processor by calling corresponding instructions stored in the memory, or may be performed by a second control module that is run by the processor.

Step 402. Control display of a map interface in response to a new route creation request of the user on the cruise interface.

When the user needs to learn a new route, the new route creation request may be triggered through the new route creation entry. In response to the new route creation request of the user, a map interface is displayed to the user. The map interface may be provided based on the navigation map, allowing the user to select a start point and an end point of the new route to be created.

In an optional example, step 402 may be performed by the processor by calling corresponding instructions stored in the memory, or may be performed by a third control module that is run by the processor.

Step 403. Determine the route learning request of the user in response to a target start point and a target end point that are selected on the map interface by the user.

After selecting the target start point and the target end point on the map interface, the user may trigger the route learning request by clicking "Confirm" or the like.

Optionally, after the target start point and the target end point are selected by the user, at least one recommended route from the target start point to the target end point may be displayed based on target start point and the target end point of the user for the user to select, and the route learning request may be triggered after the user selection. For example, after the target start point and the target end point are selected by the user, a route from the target start point to the target end point is directly recommended and displayed for the user according to a shortest route rule. If the user agrees, the route learning request may be triggered directly. In addition, the user may be provided with an option of switching to another route, and after the triggering, other routes from the target start point to the target end point may be displayed for the user for selection. The route learning request is triggered after the user selection, so that the route learning request includes the target start point and the target end point that are selected by the user, and the route from the target start point to the target end point. Therefore, in response to the route learning request of the user, the target learning route may be determined from the route learning request.

In an optional example, step 403 may be performed by the processor by calling corresponding instructions stored in the memory, or may be performed by a second determining module that is run by the processor.

This disclosure provides the user with convenient dedicated route cruise learning customization function and a post-learning dedicated route cruise function through a human machine interface (HMI), which helps to further improve the user experience.

FIG. 7 is a schematic flowchart of a cruise route map generation method according to yet another exemplary embodiment of this disclosure.

In an optional example, before step 201 of in response to the route learning request of the user, determining the target learning route corresponding to the route learning request, the method further includes the following step.

Step 404. Determine the route learning request of the user in response to a selection operation of the user on an uncompleted learning route interface, where the uncompleted learning route interface includes at least one uncompleted learning route.

When the user is at a start point of an uncompleted learning route that has been created and needs to travel to an end point of the uncompleted learning route, the route learning request may be triggered by entering the uncompleted learning route interface and selecting the uncompleted learning route as a current learning route. A specific triggering mode may be set according to actual requirements, and is not limited in this disclosure.

In an optional example, step 404 may be performed by the processor by calling corresponding instructions stored in the memory, or may be performed by a third determining module that is run by the processor.

In an optional example, after step 203 of generate the mapping information corresponding to the target learning route based on the ambient environment information, the method further includes the following steps.

Step 2041. Upload the mapping information to a server, so that the server generates the cruise route map corresponding to the target learning route based on the mapping information.

The server may be any implementable server that communicates with an electronic device on the vehicle, such as a cloud server, an individual server, or a server cluster. This is not specifically limited. After user confirmation, the mapping information may be uploaded to the server to generate the cruise route map on the server side, and then the generated cruise route map may be returned to the electronic device on the vehicle for saving.

In an optional example, step 2041 may be performed by the processor by calling corresponding instructions stored in the memory, or may be performed by a first sending module that is run by the processor.

Step 2042. Receive and save the cruise route map returned by the server.

The cruise route map corresponding to the target learning route that is returned by the server may be saved after being received, so as to provide the user with the dedicated route cruise function after the cruise route map meets the cruise requirements.

Optionally, the cruise route map may be returned to the current vehicle side after the server detects that the cruise requirements are met, or may be returned to the current vehicle side after each time being generated through learning. This may be specifically set according to actual requirements.

Optionally, in a case of generating the cruise route map by the server, whether the cruise route map meets the cruise requirements may be detected on the server side or may be detected on the vehicle side. This is not specifically limited.

In an optional example, for a case of generating the cruise route map on the vehicle side, a sharing request message may be pushed to the user after learning is completed, to request the user whether to agree to share the learned cruise route map of the current route with other users. If the user confirms sharing, the learned cruise route map may be sent to the server, so that the server provides shared cruise route services to other users. This may be specifically set according to actual requirements.

In an optional example, step 2042 may be performed by the processor by calling corresponding instructions stored in the memory, or may be performed by a first receiving module that is run by the processor.

In the embodiments of this disclosure, for a frequently traveled route of the user, dedicated route cruising may be constructed purposely, which can help to increase frequency of use of the navigation and autonomous driving function, improve continuity and completeness of intelligent driving experience, and effectively expand an activatable range of the navigation and autonomous driving function. Specifically, for the frequently traveled route of the user, a visual environment modeling technology may be used to break limitations on the coverage of the high-precision map, so that a point-to-point navigation and autonomous driving system that is exclusive to the user route may be created, which helps to improve travel efficiency and experience of the user. Moreover, the dedicated route cruising may be implemented based on real-time environment modeling of the vehicle, without relying on expensive high-precision maps on the basis of not increasing software and hardware costs of a vehicle system, thereby helping to reduce costs of an intelligent driving system.

Any cruise route map generation method provided in the embodiments of this disclosure may be implemented by any suitable device with a data processing capability, including but not limited to a terminal device and a server. Alternatively, any cruise route map generation method provided in the embodiments of this disclosure may be implemented by the processor. For example, the processor implements any cruise route map generation method described in the embodiments of this disclosure by calling corresponding instructions stored in the memory. Details are not described below.

Persons of ordinary skills in the art may understand that: all or some of the steps for implementing the foregoing method embodiments may be completed through hardware related to program instructions. A program may be stored in a computer readable storage medium. During execution, the program performs the steps including the foregoing method embodiments. Storage media include various media that may store program code, such as a ROM, a RAM, a magnetic disk, or a compact disc.

### Exemplary apparatus

FIG. 8 is a schematic diagram of a structure of a cruise route map generation apparatus according to an exemplary embodiment of this disclosure. The apparatus in this embodiment may be configured to implement the corresponding method embodiments of this disclosure. The apparatus shown in FIG. 8 includes a first determining module 501, a first obtaining module 502, a first processing module 503, and a second processing module 504.

The first determining module 501 is configured to determine, in response to a route learning request of a user, a target learning route corresponding to the route learning request. The first obtaining module 502 is configured to obtain ambient environment information of a current vehicle during a process in which the current vehicle drives along the target learning route. The first processing module 503 is configured to generate mapping information corresponding to the target learning route based on the ambient environment information obtained by the first obtaining module 502. The second processing module 504 is configured to generate a cruise route map corresponding to the target learning route based on the mapping information generated by the first processing module 503.

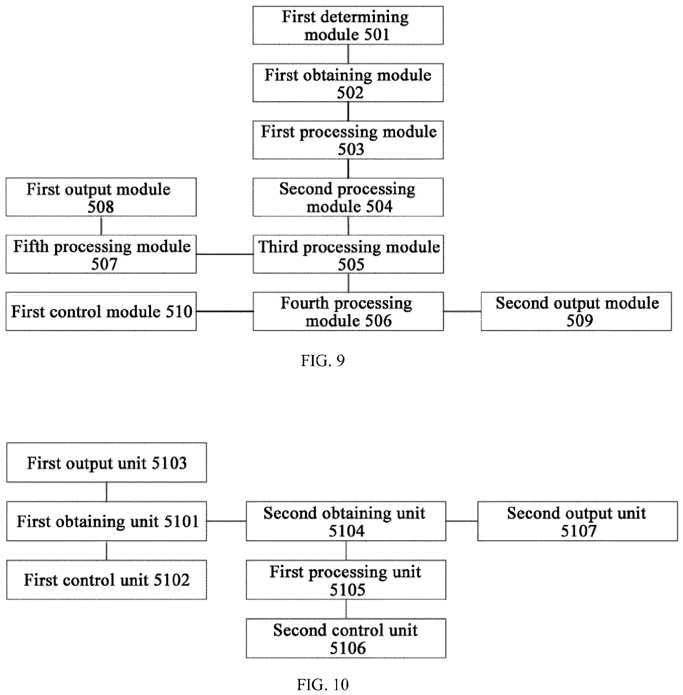

FIG. 9 is a schematic diagram of a structure of a cruise route map generation apparatus according to another exemplary embodiment of this disclosure.

In an optional example, the apparatus in this embodiment of this disclosure further includes a third processing module 505 and a fourth processing module 506.

The third processing module 505 is configured to inspect the cruise route map according to a first preset inspection rule to obtain a first inspection result. The fourth processing module 506 is configured to push a cruise function corresponding to the cruise route map to the user in response to that the first inspection result is passed.

In an optional example, the apparatus in this embodiment of this disclosure further includes a fifth processing module 507 that is configured to save the target learning route as an uncompleted learning route in response to that the first inspection result is not passed.

In an optional example, the apparatus in this embodiment of this disclosure further includes a first output module 508 that is configured to output prompt information for continuing training.

In an optional example, the apparatus in this embodiment of this disclosure further includes a second output module 509 that is configured to control output of introduction information about the cruise function corresponding to the cruise route map.

In an optional example, the apparatus in this embodiment of this disclosure further includes a first control module 510 that is configured to perform, in response to the cruise request of the user for the target learning route, cruise control on the current vehicle based on the cruise route map corresponding to the target learning route.

FIG. 10 is a schematic diagram of a structure of a first control module 510 according to an exemplary embodiment of this disclosure.

In an optional example, the first control module 510 includes a first obtaining unit 5101 and a first control unit 5102.

The first obtaining unit 5101 is configured to obtain a current traffic situation of the target learning route in response to the cruise request of the user for the target learning route. The first control unit 5102 is configured to perform, in response to that the current traffic situation is normal, cruise control on the current vehicle based on the cruise route map corresponding to the target learning route.

In an optional example, the first control module 510 further includes a first output unit 5103 that is configured to output prompt information in response to that the current traffic situation of the first route is abnormal.

In an optional example, the first control module 510 further includes a second obtaining unit 5104, a first processing unit 5105, and a second control unit 5106.

The second obtaining unit 5104 is configured to obtain, in response to that the current traffic situation is abnormal, a first route that has already been learned by other users and that has a start point and an end point same as those of the target learning route.

The first processing unit 5105 is configured to push the first route to the user in response to that a current traffic situation of the first route is normal.

The second control unit 5106 is configured to perform, in response to use confirmation information of the user for the first route, cruise control on the current vehicle based on a cruise route map corresponding to the first route.

A second output unit 5107 is configured to output prompt information in response to that the current traffic situation of the first route is abnormal.

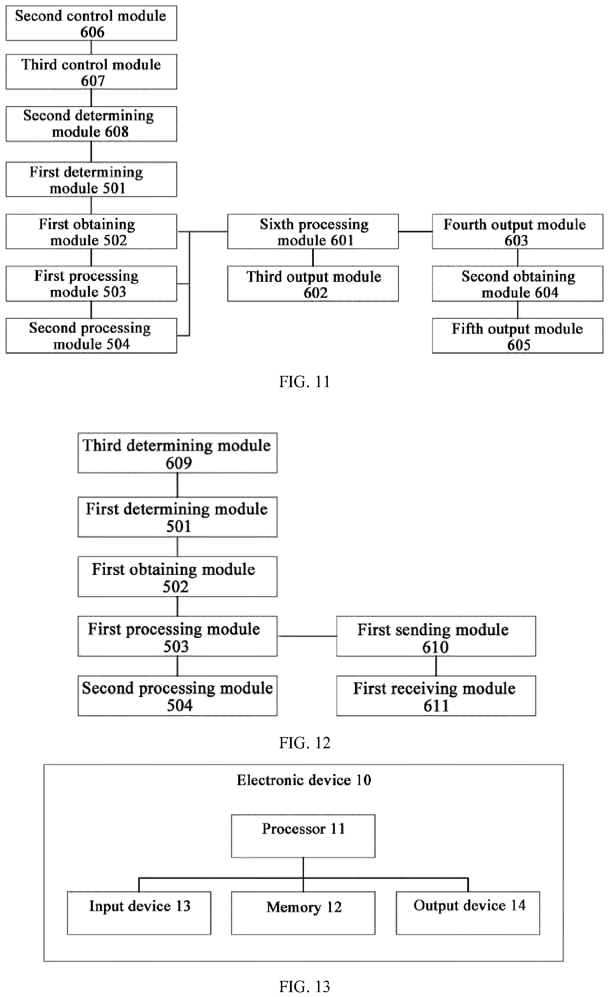

FIG. 11 is a schematic diagram of a structure of a cruise route map generation apparatus according to still another exemplary embodiment of this disclosure.

In an optional example, the apparatus in this embodiment of this disclosure further includes a sixth processing module 601, a third output module 602, and a fourth output module 603.

The sixth processing module 601 is configured to determine, during the process in which the current vehicle drives along the target learning route, whether current learning is successful according to a second preset inspection rule. The third output module 602 is configured to output current learning progress of the target learning route in response to that the current learning is successful. The fourth output module 603 is configured to output prompt information indicating a failure of the current learning of the target learning route in response to that the current learning fails.

In an optional example, the apparatus in this embodiment of this disclosure further includes a second obtaining module 604 and a fifth output module 605.

The second obtaining module 604 is configured to obtain a current quantity of learning failures of the target learning route. The fifth output module 605 is configured to output route replacement prompt information in response to that the current quantity of learning failures is greater than a preset threshold of times.

In an optional example, the third output module 602 is specifically configured to: in response to that the current learning is successful, output the current learning progress of the target learning route to a display device, and control to display the current learning progress on a display screen of the display device in a preset manner.

In an optional example, the apparatus in this embodiment of this disclosure further includes a second control module 606, a third control module 607, and a second determining module 608.

The second control module 606 is configured to control display of a cruise interface in response to a request to enter the cruise interface of the user. The third control module 607 is configured to control display of a map interface in response to a new route creation request of the user on the cruise interface. The second determining module 608 is configured to determine the route learning request of the user in response to a target start point and a target end point that are selected on the map interface by the user.

FIG. 12 is a schematic diagram of a structure of a cruise route map generation apparatus according to yet another exemplary embodiment of this disclosure.

In an optional example, the apparatus in this embodiment of this disclosure further includes a third determining module 609 that is configured to determine the route learning request of the user in response to a selection operation of the user on an uncompleted learning route interface, where the uncompleted learning route interface includes at least one uncompleted learning route.

In an optional example, the apparatus in this embodiment of this disclosure further includes a first sending module 610 and a first receiving module 611.

The first sending module 610 is configured to upload the mapping information to a server, so that the server generates the cruise route map corresponding to the target learning route based on the mapping information. The first receiving module 611 is configured to receive and save the cruise route map returned by the server.

For beneficial technical effects corresponding to the exemplary embodiments of this apparatus, reference may be made to the corresponding beneficial technical effects in the section of exemplary method described above, and details are not described herein again.

### Exemplary electronic device

FIG. 13 is a schematic diagram of a structure of an electronic device according to an application embodiment of this disclosure. In this embodiment, an electronic device 10 includes one or more processors 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the one or more program instructions to implement the method according to the various embodiments of this disclosure that are described above and/or other desired functions.

In an example, the electronic device 10 may further include an input device 13 and an output device 14. These components are connected to each other through a bus system and/or another form of connection mechanism (not shown).

The input device 13 may further include, for example, a keyboard and a mouse.

The output device 14 may output various information to the outside, and may include, for example, a display, a speaker, a printer, a communication network, and a remote output device connected to the communication network.

Certainly, for simplicity, FIG. 13 shows only some of components in the electronic device 10 that are related to this disclosure, and components such as a bus and an input/output interface are omitted. In addition, according to specific application situations, the electronic device 10 may further include any other appropriate components.

### Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A cruise route map generation method, comprising:
in response to a route learning request of a user, determining a target learning route corresponding to the route learning request;
obtaining ambient environment information of a current vehicle during a process in which the current vehicle drives along the target learning route;
generating mapping information corresponding to the target learning route based on the ambient environment information; and
generating a cruise route map corresponding to the target learning route based on the mapping information.

2. The method according to claim 1, further comprising:
inspecting the cruise route map according to a first preset inspection rule to obtain a first inspection result; and
in response to that the first inspection result is passed, pushing a cruise function corresponding to the cruise route map to the user.

3. The method according to claim 2, further comprising:
in response to that the first inspection result is not passed, saving the target learning route as an uncompleted learning route.

4. The method according to claim 3, wherein after the saving the target learning route as an uncompleted learning route, the method further comprises:
outputting prompt information for continuing training.

5. The method according to claim 2, wherein after the in response to that the first inspection result is passed, pushing a cruise function corresponding to the cruise route map to the user, the method further comprises:
controlling output of introduction information about the cruise function corresponding to the cruise route map.

6. The method according to claim 2, wherein after the in response to that the first inspection result is passed, pushing a cruise function corresponding to the cruise route map to the user, the method further comprises:
in response to a cruise request of the user for the target learning route, performing cruise control on the current vehicle based on the cruise route map corresponding to the target learning route.

7. The method according to claim 6, wherein the in response to a cruise request of the user for the target learning route, performing cruise control on the current vehicle based on the cruise route map corresponding to the target learning route comprises:
obtaining a current traffic situation of the target learning route in response to the cruise request of the user for the target learning route; and
in response to that the current traffic situation is normal, performing cruise control on the current vehicle based on the cruise route map corresponding to the target learning route.

8. The method according to claim 7, further comprising:
outputting prompt information in response to that the current traffic situation is abnormal; or
in response to that the current traffic situation is abnormal, obtaining a first route that has already been learned by other users and that has a start point and an end point same as those of the target learning route;
pushing the first route to the user in response to that a current traffic situation of the first route is normal;
in response to use confirmation information of the user for the first route, performing cruise control on the current vehicle based on a cruise route map corresponding to the first route; and
outputting prompt information in response to that the current traffic situation of the first route is abnormal.

9. The method according to claim 1, further comprising:
during the process in which the current vehicle drives along the target learning route, determining whether current learning is successful according to a second preset inspection rule;
in response to that the current learning is successful, outputting current learning progress of the target learning route; or
in response to that the current learning fails, outputting prompt information indicating a failure of the current learning of the target learning route.

10. The method according to claim 9, further comprising:
obtaining a current quantity of learning failures of the target learning route; and
in response to that the current quantity of learning failures is greater than a preset threshold of times, outputting route replacement prompt information.

11. The method according to claim 9, wherein the in response to that the current learning is successful, outputting current learning progress of the target learning route comprises:
in response to that the current learning is successful, outputting the current learning progress of the target learning route to a display device, and controlling to display the current learning progress on a display screen of the display device in a preset manner.

12. The method according to claim 1, wherein before the in response to a route learning request of a user, determining a target learning route corresponding to the route learning request, the method further comprises:
controlling display of a cruise interface in response to a request to enter the cruise interface of the user;
controlling display of a map interface in response to a new route creation request of the user on the cruise interface; and
determining the route learning request of the user in response to a target start point and a target end point that are selected on the map interface by the user.

13. The method according to claim 1, wherein before the in response to a route learning request of a user, determining a target learning route corresponding to the route learning request, the method further comprises:
determining the route learning request of the user in response to a selection operation of the user on an uncompleted learning route interface, wherein the uncompleted learning route interface comprises at least one uncompleted learning route.

14. The method according to claim 1, wherein after the generating mapping information corresponding to the target learning route based on the ambient environment information, the method further comprises:
uploading the mapping information to a server, so that the server generates the cruise route map corresponding to the target learning route based on the mapping information; and
receiving and saving the cruise route map returned by the server.

15. A cruise route map generation apparatus, comprising:
a first determining module, configured to determine, in response to a route learning request of a user, a target learning route corresponding to the route learning request;
a first obtaining module, configured to obtain ambient environment information of a current vehicle during a process in which the current vehicle drives along the target learning route;
a first processing module, configured to generate mapping information corresponding to the target learning route based on the ambient environment information; and
a second processing module, configured to generate a cruise route map corresponding to the target learning route based on the mapping information.

16. A computer readable storage medium, wherein the storage medium stores a computer program, and the computer program is used for implementing the cruise route map generation method according to any one of claims 1 to 14.

17. An electronic device, wherein the electronic device comprises:
a processor; and
a memory, configured to store processor-executable instructions, wherein
the processor is configured to read the executable instructions from the memory, and execute the instructions to implement the cruise route map generation method according to any one of claims 1 to 14.
